# EUROPEAN PATENT SPECIFICATION

(11) **EP 3 494 032 B1**
(45) Date of publication and mention of the grant of the patent: **07.10.2020**
(21) Application number: 17748461.5
(22) Date of filing: 02.08.2017
(51) Int. Cl.: B62D 55/065, B62D 55/084, B62D 55/108

(54) **TRACK SYSTEM FOR A WORK VEHICLE**
SCHIENENSYSTEM FÜR EIN ARBEITSFAHRZEUG
SYSTÈME DE CHENILLES POUR ENGIN DE CHANTIER

(30) Priority: 02.08.2016 IT 201600081211
(43) Date of publication of application: 12.06.2019
(73) Proprietor: CNH Industrial Italia S.P.A., 10135 Turin (IT)
(72) Inventor: STEFANO, Fiorati, 44028 Poggio Renatico (Ferrara) (IT); PAOLINI, Francesco, 41122 Modena (IT); STOLTMAN, Russell V., Frankfort Illinois 60423 (US); VIK, Brian D., Barnesville Minnesota 56514 (US)
(74) Representative: CNH Industrial IP Department
(86) International application number: PCT/EP2017/069512
(87) International publication number: WO 2018/024766

(56) References cited:
- DE-C- 578 902
- US-A- 2 427 006
- US-A- 4 361 363
- US-A1- 2005 087 374

## Description

The present invention relates to a track system for a tracked work vehicle, such as a construction equipment vehicle or a military tracked vehicle or an agricultural vehicle, e.g. a combined harvester or the like.

### BACKGROUND OF THE INVENTION

A tracked work vehicle is provided with a suspension in order to increase adhesion and traction performances on soft grounds, such as grounds affected by a relatively high degree of humidity or grounds having a relatively high quantity of sand.

A rubber tracked vehicle is preferred to satisfy the need for a relatively high speed on paved streets, e.g. during a travel of the work vehicle to and from a construction site or a cultivated field. Furthermore, a rubber track tends to be relatively less expensive than other tracks.

The suspension is normally an undercarriage suspension and provides the highest traction performances when the track adheres the ground. Sometimes the surface layer of the ground is not uniform and bodies made of a hard material are found on or immediately below the surface of the ground, such as rocks, spare metallic construction materials such as tubes or the like. DE578902 discloses a tracked system for a work vehicle, in which the stiffness and kinematic compliance is provided on the stiffness side , this solution does not provide a reduced excessive wear out of insufficient constrained rollers.

When encountering such an obstacle, it is important to find a compromise between stiffness and kinematic compliance for the design of the track-supporting idlers, rollers and structure of the suspension. Otherwise the track, in particular the rubber track, may undergo excessive wear. In particular it is important that the rollers are sufficiently constrained to provide proper support to the track when the ground is uniformly soft and are mobile enough to retract only in the near surroundings of a hard body on the ground surface. In both instances the scope is to keep or improve traction performances and, at the same time, lower the wear of the track.

### SUMMARY OF THE INVENTION

The scope of the present invention is achieved by a rubber tracked work vehicle according to claim 1.

According to a preferred embodiment, intermediate rocker is connected to the undercarriage beam via the first and the second rockers.

According to another preferred embodiment the elastic or visco-elastic connection is a bushing.

According to another preferred embodiment at least one roller wheel comprises a first and a second wheel, and a shaft to connect first and second wheels, the shaft being pivotally attached to a relevant rocker.

According to the invention, an existing tracked vehicle is retrofittable or can be provided with a linkage according to the present invention during a periodic maintenance.

Additional features of the invention are disclosed in the description and the dependent claims.

### BRIEF DESCRIPTION OF THE DRAWINGS

For a better understanding of the present invention, the latter will further be disclosed with reference to the accompanying figures in which:
- Figure 1 shows a work vehicle that can be equipped with the present invention;
- Figure 2 is a sketch of a linkage for the vehicle of figure 1;
- Figure 3 is a bottom enlarged perspective view of an embodiment of the linkage of figure 2. Some elements are cancelled for clarity's sake; and
- Figure 4 is a lateral enlarged perspective view of figure 3.

### DETAILED DESCRIPTION OF THE DRAWINGS

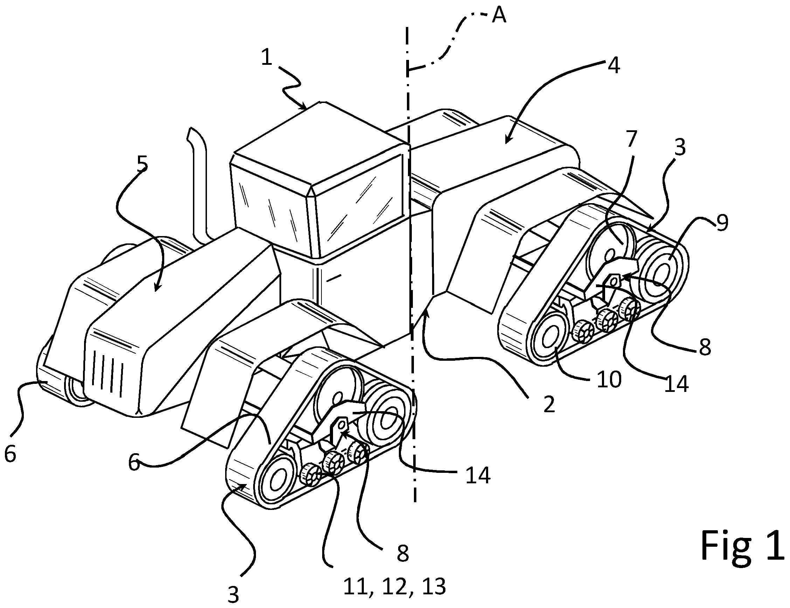

Figure 1 refers, as a whole, to a work vehicle 1 comprising a frame 2 and at least two rubber tracked, preferably four, track systems 3 attached to frame 2.

Frame 2 can be a rigid frame and in this case the vehicle may be provided with steering wheels (not shown); or a hinged frame having a front part 4, a rear part 5 hinged to front part 4 about axis A and a steering unit (not shown), preferably a hydraulic steering unit comprising linear actuators, to control the relative angular position of front part 4 with respect to rear part 5 about axis A.

Each track system 3 comprises a rubber track 6, a drive wheel 7 extending from a differential (not shown) for driving track 6 and an undercarriage 8 pivoting with respect to frame 2. Undercarriage 8 comprises a front idler wheel 9, a rear idler wheel 10 about which track 6 is wrapped, roller wheels 11, 12, 13 for guiding track 6, all of which are supported by an undercarriage beam 14, which extends fore-and-aft, and to which wheels 11, 12, 9 and 10 are coupled. While the "front idler wheel," "rear idler wheel," "roller wheel" are singular terms, a plurality of wheels may be provided at each relative position in side-to-side orientation, such as in this embodiment. Advantageously, in order to provide a better contact surface with rubber track 6, at least wheels 11, 12, 13, 9 and 10 are twin wheels, i.e. each wheel comprises two wheels coupled side-to-side.

In particular undercarriage beam 14 is connected to frame 2 in order to tilt in a plane parallel to axis A and oriented fore-and-aft when vehicle 1 travels along a straight path. Preferably undercarriage beam 14 is hinged to frame 2 in order to tilt for a maximum of 15 degrees with respect to a neutral position shown in figure 1. Instead drive wheel 7 is fixed to frame 2.

Each track system 3 further comprises a tilting linkage 15 to connect roller wheels 11, 12, 13 to undercarriage beam 14 in order to provide one or more degrees of freedom to such rollers with respect to beam 14. In particular, linkage 15 comprises a rigid rocker 20, 21, 22 connected to a respective roller wheel 11, 12, 13. Rigid rockers 20, 22 are respectively adjacent to idler 9 and idler 10 and hinged to beam 14. Rocker 21 is longitudinally placed between rockers 20, 22 and is connected to beam 14 via rockers 20, 22. Therefore intermediate rocker 21 is floating with respect to beam 14.

In addition, track system 3 comprises at least one elastic or visco-elastic connection 23 to connect rockers 20, 22 to rocker 21 in such a way that an upwards motion of a leading roller, e.g. roller wheel 11 during climbing an obstacle 24, applies a downwards action on both trailing rollers 12 and 13, such action being transmitted through the elastic or visco-elastic connections 23. Such functioning is obtained via the floating connection of intermediate rocker 21 to beam 14, which is operated only via rockers 20, 22. In view of the required effect, the distance and relative position of each hinge and center of roller wheels 11, 12, 13 within linkage 15 provides a different distribution of forces on rollers.

Preferably, the position of roller wheels 11, 12, 13 before mounting of track 6 is such to increase the tension of the track after mounting of the latter about drive wheel 7 and idler wheels 9, 10. Furthermore, the connection can be either passive, i.e. including a spring and a damper that are pre-set during assembly or by the user before a specific mission of vehicle 1, or active, i.e. including actuators to change the spring modulus or stiffness and/or the damping of the connection when vehicle 1 is working.

Preferably, the connection is visco-elastic and comprises inserts, e.g. a pack of discs, or bushings of a rubber material possibly reinforced either by particles or fibres or by one or more woven or non-woven layers. Rubber inserts or bushings are loaded to transfer the target action by either compression or shear or a combination of the two.

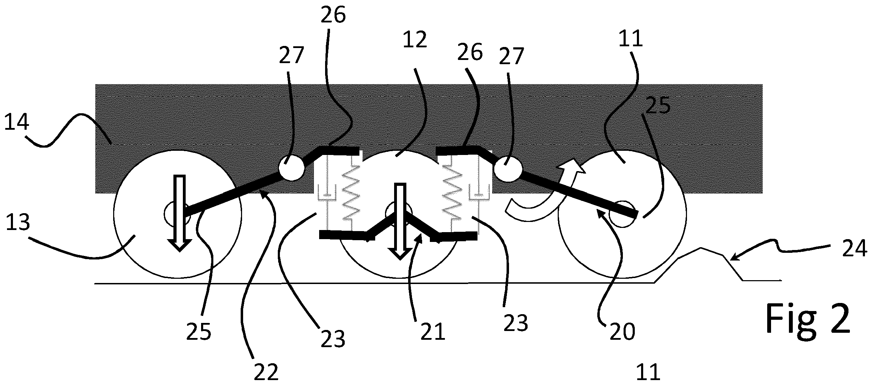

According to the functional sketch of figure 2, each rocker 20, 22 comprises a first end portion 25 carrying a relative roller 11, 13 and a second end portion 26 projecting on an opposite side of the first end portion with respect to a hinge 27 for connection of the rocker to undercarriage beam 14. Rockers 20, 22 are specular with respect to intermediate rocker 21 (figure 2) so that rollers 11, 13 are opposite to respective hinge 27 with respect to intermediate rocker 21. Intermediate rocker 21 is preferably symmetrical with respect to a plan comprising the axis of roller 12 but other configurations are possible. According to the present embodiment connections 23 apply the respective loads on points that are symmetrical with respect to the plane comprising the axis of roller 12.

When roller 12 is leading roller, obstacle 24 lifts intermediate rocker 21 and this causes both rockers 20, 22 to push down the respective trailing rollers 11, 13.

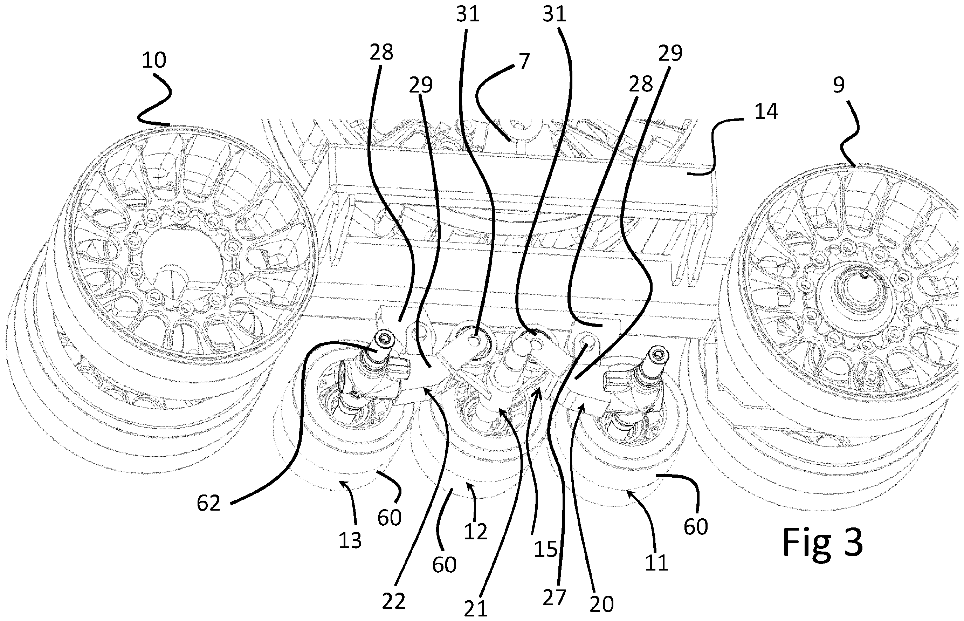

According to a preferred embodiment of the invention (figure 3), rockers 20, 21, 22 are located below the undercarriage beam 14 and hinges 27 for connection with rockers 20, 22 are defined by stirrups 28 extending from beam 14 towards the ground opposite to driving wheel 7. Furthermore, rockers 20, 21, 22 are hinged one to the other. To do so, first and second end portions 25, 26 of rockers 20, 22 define an angle between 90° and 180° and hinge 27 is located in a vertex portion 29 of rockers 20, 22 formed between first and second end portions 25, 26.

Furthermore the elastic or visco-elastic connection 23 is located below undercarriage beam 14 and comprises a rubber bushing mounted in hinge 31 for connection between two adjacent rockers 20, 21, 22. Preferably, the shape of rockers 20, 21, 22 and the position of hinges 27 and 31 is such to provide a kinematically fixed configuration when loaded on a geometric plane. This means that, if the rubber bushing 23 were substituted by a rigid body, rollers 11, 12, 13 and rockers 20, 21, 22 could not move one with respect to the other. In such a condition, the provision of rubber bushings 23 in hinges 31 and optionally also in hinges 27 provides, by means of compression of the bushings depending on the obstacles encountered by track 6, relatives degrees of freedom between rockers 20, 21, 22 and, accordingly, between rollers 11, 12, 13. Such configuration therefore provides kinematic liability only in view of the fact that rubber bushings 23 are deformable. This results in a relatively stiff configuration of the suspension, i.e. the combination of tilting supports and elastic or visco-elastic connection.

As a further feature shown in the drawings, rollers 11, 12, 13 comprise a first and a second wheel 60, 61 rigidly connected one to the other by a shaft 62. Each shaft 62 is pivotably attached to first end portion 25 of the relative rocker 20, 22 or to rocker 21, preferably in the plane of symmetry, in order to provide a rotational degree of freedom about an axis A that is co-planar to a mid-plane of track 6 and/or of shaft 62.

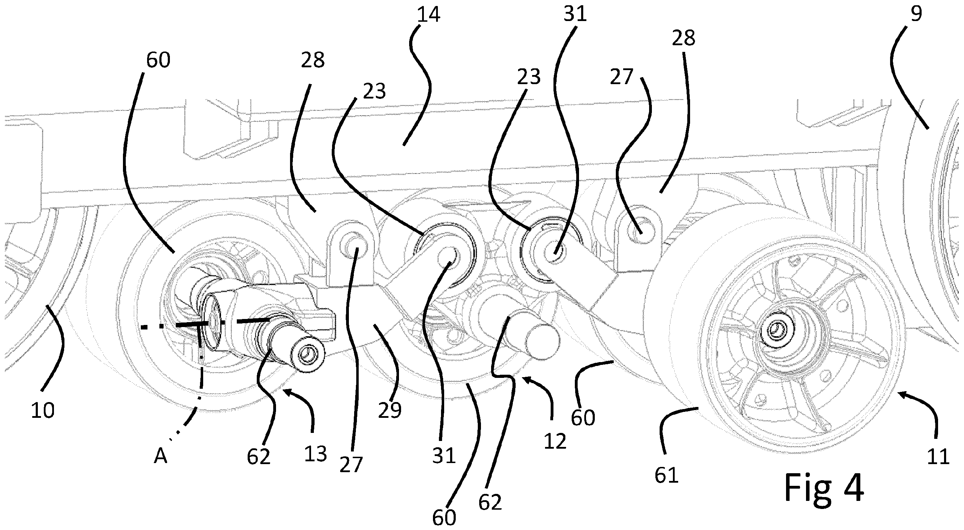

Preferably (figure 4), pivoting axis of shaft 62 is defined by a pin (not shown), in particular a screwable pin, attached in a dedicated seat within first end portion 25. Shaft 62 is attached to the pin. In order to restore a neutral position, i.e. a position wherein shaft 62 is substantially parallel to axes of drive wheel 7 and idler wheels 9, 10, a resilient element (not shown) acts on shaft 62. Preferably resilient element is housed at least in part or wholly within first end portion 25. According to one embodiment, the resilient element comprises rubber bushings, or a pack of rubber discs or the like and is coaxial to shaft 62.

It is preferable that elastic or visco-elastic connection 23 is designed such that, when travelling on a paved street, at least front idler wheel 9, preferably also idler wheel 10, are lifted from the paved surface. Without a prejudice to the stability of the work vehicle, this decreases wear on rubber track 6.

The advantages of an undercarriage suspension according to the present invention are the following.

The provision of rockers connected one to the other by elastic or visco-elastic connections provides the combined effect of increasing effectiveness to overcome obstacles and, at the same time, reduce the wear of the track. Indeed a controlled compliance of the rollers is such to avoid tension peaks within the track when the ground is rough or non-homogeneous. This is in particular true where the linkage 15 is such to provide that both trailing rollers 12, 13 a load that presses track 6 down when leading roller 11 climbs obstacle 24.

Connections 23 located below undercarriage beam 14 provide the lowest possible impact on undercarriage beam.

It is clear that changes and variations are applicable to the work vehicle according to the present invention without departing from the scope of protection as defined in the attached claims.

For example, track 6 can be arranged along a triangular path, as shown e.g. in figure 1, or along other paths. This may increase or reduce the number of idler wheels with respect to the embodiments discussed in the preceding paragraphs.

When at least three rollers are provided to guide track 6, two rollers may be attached to a single intermediate rocker such as e.g. a walking beam, in order to rigidly tilt one with respect to the other when track 6 runs on an obstacle 23.

It is possible to retrofit existing work vehicles with a kit comprising at least the undercarriage beam 14, rockers 20, 21, 22 and connection 23.

According to a further not shown embodiment connection 23 is a rubber block, preferably a reinforced rubber block, defining a deformable spacer between adjacent rockers 20, 21, 22 according to the sketch of figure 2. The rubber block is compressed when adjacent rockers rotate in opposite angular directions. In order to provide proper absorption and/or load resistance, the rubber block shall have suitable dimensions.

The rubber block is located below undercarriage beam 14 and is preferably carried by the relevant rockers 20, 21, 22. Conveniently the rubber block is interference fitted between second end portions 26 an intermediate rocker 21 in order to provide, after mounting, a tensioning action on track 6. The rubber block is preferably attached to one of the adjacent rockers and abuts without being attached to the other of the adjacent rockers.

It is possible that connection 23 be a link comprising a single elastic or visco-elastic element, in particular a linear single elastic or visco-elastic element or damper.

As an alternative, connection 23 comprises a rubber block compressed by rockers 20, 22.

## Claims

1. A tracked system for a work vehicle comprising a suspension (3) having a driving wheel (7), an undercarriage beam (14) hinged to a frame (2) of the vehicle, at least one idler wheel (9), at least a first, a second and a third roller wheels (11, 12, 13) attached to the undercarriage beam (14) and a rubber track (6) wound about at least driving wheel (7), idler wheel (9), roller wheels (11, 12, 13), **characterized by** comprising a tilting linkage (15) having a first and a second rocker (20, 22) to attach first and third roller wheels (11, 13) to the undercarriage beam (14) and an intermediate rocker (21) to attach the second roller (12) to the first and third rollers (11, 13) so that first and second roller wheels (11, 12) are movable one with respect to the other at least in certain working conditions, and an elastic or visco-elastic connection (23) to connect intermediate rocker (21) to first and second rockers (20, 22) such that the intermediate rocker (21) is longitudinally placed between the rockers (20, 22) and is connected to the beam (14) via the rockers (20, 22) such that the intermediate rocker (21) is floating with respect to the beam (14) and such that a load applied to one roller wheel (11) transfers to both other rollers (12, 13) through the connection (23) to increase the pressure uniformity of the track on the ground.

2. Track system according to either claim 1, wherein the connection (23) is a bushing parallel with a hinge (27) between the intermediate rocker (21) and at least one of the first and second rockers (20, 22).

3. Track system according to any of the preceding claims, wherein the connection (23) is located below the undercarriage beam (14).

4. Track system according to any of the preceding claims, wherein the linkage (15) is symmetric with respect to a plane comprising the axis of the second roller wheel (12).

5. Track system according to any of the preceding claims, wherein at least one roller wheel comprises a first and a second wheels (60, 61), and a shaft (62) to connect first and second wheels (60, 61), the shaft being pivotally attached to a relevant rocker (20, 22).

6. Track system according to claim 5, wherein a neutral position of the shaft (62) is resiliently restored such that the shaft is substantially parallel to axes of the idler wheel and/or the driving wheel (9, 7).

7. Method of retrofitting a work vehicle with a track system (3) according to any of the preceding claims.

8. Method according to claim 7, wherein the roller wheels (11, 12, 13) are twin wheels.

## Patentansprüche

1. Raupensystem für ein Arbeitsfahrzeug umfassend eine Aufhängung (3) mit einem Antriebsrad (7), einem Fahrwerkträger (14), der gelenkig mit einem Rahmen (2) des Fahrzeugs verbunden ist, zumindest einem Leitrad (9), zumindest einer ersten, einer zweiten und einer dritten Laufrolle (11, 12, 13), die am Fahrwerkträger (14) angebracht sind, und einer Gummiraupe (6), die zumindest auf das Antriebsrad (7), das Leitrad (9) und die Laufrollen (11, 12, 13) aufgezogen ist, **dadurch gekennzeichnet, dass** es eine Schwenkverbindung (15) umfasst, die eine erste und eine zweite Schwinge (20, 22) zum Anbringen der ersten und der dritten Laufrolle (11, 13) am Fahrwerkträger (14) und eine Mittelschwinge (21) zum Anbringen der zweiten Laufrolle (12) an der ersten und der dritten Laufrolle (11, 13) umfasst, sodass die erste und die zweite Laufrolle (11, 12) zumindest in bestimmten Betriebszuständen eine bezüglich der anderen beweglich ist, und dass es eine elastische oder viskoelastische Verbindung (23) zum Verbinden der Mittelschwinge (21) mit der ersten und der zweiten Schwinge (20, 22) umfasst derart, dass die Mittelschwinge (21) in Längsrichtung zwischen den Schwingen (20, 22) angeordnet und über die Schwingen (20, 22) mit dem Träger (14) verbunden ist, sodass die Mittelschwinge (21) bezüglich des Trägers (14) schwimmt und sodass eine Last, die auf eine Laufrolle (11) ausgeübt wird, durch die Verbindung (23) auf die beiden anderen Rollen (12, 13) übertragen wird, um die Gleichmäßigkeit des Drucks der Raupe auf den Boden zu erhöhen.

2. Raupensystem nach Anspruch 1, wobei die Verbindung (23) eine Lagerbuchse parallel zu einem Gelenk (27) zwischen der Mittelschwinge (21) und zumindest einer aus erster und zweiter Schwinge (20, 22) ist.

3. Raupensystem nach einem der vorangehenden Ansprüche, wobei die Verbindung (23) unterhalb des Fahrwerkträgers (14) angeordnet ist.

4. Raupensystem nach einem der vorangehenden Ansprüche, wobei die Verbindung (15) symmetrisch bezüglich einer Ebene ist, die die Achse der zweiten Laufrolle (12) umfasst.

5. Raupensystem nach einem der vorangehenden Ansprüche, wobei zumindest eine Laufrolle eine erste und eine zweite Rolle (60, 61) und eine Welle (62) zum Verbinden der ersten und der zweiten Rolle (60, 61) umfasst, wobei die Welle drehbar an der entsprechenden Schwinge (20, 22) befestigt ist.

6. Raupensystem nach Anspruch 5, wobei eine neutrale Position der Welle (62) elastisch gesichert ist, sodass die Welle im Wesentlichen parallel zu den Achsen des Leitrads und/oder des Antriebsrads (9, 7) ist.

7. Verfahren zum Nachrüsten eines Arbeitsfahrzeugs mit einem Raupensystem (3) nach einem der vorangehenden Ansprüche.

8. Verfahren nach Anspruch 7, wobei die Laufrollen (11, 12, 13) Zwillingsrollen sind.

## Revendications

1. Système de chenilles pour engin de chantier comprenant une suspension (3) dotée d'une roue d'entraînement (7), d'une traverse de train (14) articulée sur un cadre (2) de l'engin, d'au moins une roue libre (9), d'au moins un premier, un deuxième et un troisième galets de roulement (11, 12, 13) fixés à la traverse de train (14) et d'une chenille d'entraînement en caoutchouc (6) enroulée autour d'au moins une roue d'entraînement (7), une roue libre (9), des galets de roulement (11, 12, 13), **caractérisé en ce que** la méthode comprend une tringlerie de basculement (15) disposant d'une première et d'une deuxième bascule (20, 22) pour fixer les premier et troisième galets de roulement (11, 13) à la traverse de train (14) et une bascule intermédiaire (21) pour fixer la deuxième bascule (12) à la première et à la troisième bascules (11, 13) de manière à ce que les premier et deuxième galets de roulement (11, 12) soient mobiles les uns par rapport aux autres dans au moins certaines conditions de travail, et une connexion élastique ou viscoélastique (23) pour connecter la bascule intermédiaire (21) aux première et deuxième bascules (20, 22) de manière à ce que la bascule intermédiaire (21) soit placée longitudinalement entre les bascules (20, 22) et soit connectée à la traverse de train (14) et de manière à ce qu'une charge appliquée à un galet de roulement (11) soit transférée aux deux autres galets de roulement (12,13) par le biais de l'accouplement (23) afin d'augmenter l'uniformité de pression de la chenille au sol.

2. Système de chenilles selon la revendication 1, dans lequel l'accouplement (23) est une douille parallèle à une charnière (27) entre la bascule intermédiaire (21) et au moins l'une des première et deuxième bascules (20, 22).

3. Système de chenilles selon l'une quelconque des revendications précédentes, dans lequel la connexion (23) se trouve en-dessous de la traverse de train (14).

4. Système de chenilles selon l'une quelconque des revendications précédentes, dans lequel la tringlerie (15) est symétrique à un plan comprenant l'axe du deuxième galet de roulement (12).

5. Système de chenilles selon l'une quelconque des revendications précédentes, dans lequel au moins un galet de roulement comprend une première et une deuxième roues (60, 61), et un arbre (62) permettant de connecter les première et deuxième roues (60, 61), l'arbre étant attaché de manière pivotante à une bascule pertinente (20, 22).

6. Système de chenille selon la revendication 5, dans lequel une position neutre de l'arbre (62) est rétablie élastiquement de manière à ce que l'arbre soit sensiblement parallèle aux axes de la roue folle et/ou de la roue d'entraînement (9, 7).

7. Méthode de mise en conformité d'un engin de chantier avec système de chenilles (3) selon l'une quelconque des revendications précédentes.

8. Méthode selon la revendication 7, dans laquelle les galets de roulement (11, 12, 13) sont des roues jumelées.
